# EUROPÄISCHE PATENTSCHRIFT

(11) **EP 1 238 028 B1**
(45) Veröffentlichungstag und Bekanntmachung des Hinweises auf die Patenterteilung: **27.10.2004**
(21) Anmeldenummer: 00977485.2
(22) Anmeldetag: 04.11.2000
(51) Int. Cl.: C09D 163/02, C09D 5/02

(54) **WÄSSRIGE BESCHICHTUNGSZUSAMMENSETZUNGEN**
AQUEOUS COATING COMPOSITIONS
COMPOSITIONS AQUEUSES DE REVETEMENT

(30) Priorität: 13.11.1999 DE 19954828
(43) Veröffentlichungstag der Anmeldung: 11.09.2002
(73) Patentinhaber: Cognis Deutschland GmbH & Co. KG, 40589 Düsseldorf (DE)
(72) Erfinder: HÖFER, Rainer, 40477 Düsseldorf (DE); ROLOFF, Thorsten, 40468 Düsseldorf (DE); HRZIBEK, Martin, 40589 Düsseldorf (DE); FOGLIANISI, Vincenzo, I-20136 Milano (IT)
(86) Internationale Anmeldenummer: PCT/EP2000/010887
(87) Internationale Veröffentlichungsnummer: WO 2001/036550

(56) Entgegenhaltungen:
- DE-C- 19 525 826
- GB-A- 2 232 672
- GB-A- 2 298 427
- US-A- 4 374 879
- US-A- 4 636 411
- PATENT ABSTRACTS OF JAPAN vol. 1998, no. 10, 31. August 1998 (1998-08-31) & JP 10 120975 A (NISSAN MOTOR CO LTD), 12. Mai 1998 (1998-05-12)

## Beschreibung

Die Erfindung betrifft wäßrige Beschichtungszusammensetzungen.

### Stand der Technik

Die Verwendung von synthetischen, polymeren Bindemitteln hat lange Tradition in der Bauindustrie. Mit Beginn der industriellen Emulsions-Polymerisation und der damit steigenden Verfügbarkeit stabiler, thermoplastischer Kunstharzdispersionen in den fünfziger Jahren setzte z. B. im Anstrich- und Fassadenputzsektor eine zweigleisige Entwicklung ein. Dispersionsfarben *einerseits* wurden mit groben Füllstoffen und Sanden gemischt und dickschichtig zur Erzielung spezieller Oberflächenstrukturen aufgetragen. So entstanden die ersten Streichputze, Rollputze und Rillenputze. *Andererseits* wurden zur Verbesserung der Hafteigenschaften, der Widerstandsfähigkeit gegen Feuchtigkeit und der mechanischen Eigenschaften mineralischen Mörteln elastomere Kunstharzdispersionen zugesetzt. So entstanden die vergüteten Mineralputze und schließlich die reinen Kunstharzputze, die keine chemisch abbindenden Komponenten wie Kalk, Zement oder Wasserglas enthalten.

Auch die Verwendung duroplastischer polymerer Bindemittelsysteme, z. B. in Form von wasserfreien Zweikomponenten-Systemen aus Polyurethan, für die Herstellung schnellabbindender Dämmassen, offenporiger Formteile und wasserdurchlässiger Pflastersteine, ist in **DE-A-39 32 406 und DE-A-43 20 118** bereits beschrieben worden. Die Verwendung lösemittelhaltiger und lösemittelfreier, duroplastischer 2-Komponenten-Epoxy-Systeme als technologische Alternative zu 2-Komponenten-Polyurethan-Systemen für flüssige Gießharz-Anwendungen, Bodenausgleichsmassen und Betonschutz-Systeme ist aus der Fachliteratur bekannt (vergl. beispielsweise: **E. Foglianisi, R. Grützmacher, R. Höfer, *Wofür eignen sich Fußbodenbeschichtungen aus Polyurethan- und Epoxy-*** ***Harzen ?* Industriebau, Suppl. Industrie-Boden-Technik 43, [2], März/April 1997, Seiten 18-20);** hier finden auch bereits wäßrige Systeme Erwähnung.

Wäßrige Epoxy-Systeme sind für die kathodische Elektrotauchlackierung in der Automobilindustrie, aber auch für Dosenlacke und Korrosionsschutzgrundierungen schon längere Zeit bekannt (vergleiche etwa: **J. L. Chou, *Novel Corrosion-Resistant Waterborne Epoxy Coatings,* Polymers Paint Colour Journal, 1994 (Vol. 184), Seiten 413 und 416-417).**

Zur Herstellung von Epoxidharz-Emulsionen können prinzipiell die gleichen oberflächenaktiven Verbindungen gewählt werden, die sich bereits für die Herstellung von thermoplastischen Polymerdispersionen nach dem Emulsionspolymerisationsverfahren bewährt haben und die z. B. in **C. Baumann, D. Feustel, U. Held, R. Höfer, *Stabilisierungssysteme für die Herstellung von Polymer-Dispersionen,* Welt der Farben, 2/1996, Seiten 15 - 21** beschrieben sind.

Für die praktische Herstellung von Epoxidharz-Sekundäremulsionen sind spezielle, nichtionogener Emulgatoren, z. B. Disponil 23 der Cognis Deutschland GmbH, Düsseldorf/DE kommerziell verfügbar.
Weitere, hochwirksame Emulgatoren werden verfügbar, wenn man die als Epoxidharzhärter bereits bekannten Polyaminoamide von ungesättigten Fettsäuren durch Addition von Essigsäure protoniert und damit in einbaubare, kationische Emulgatoren und Härter umwandelt. Diese kationischen Polyaminoamide sind also gleichzeitig Epoxidharz-Emulgatoren und Epoxidharz-Härter. Ihr Wirkungsoptimum liegt im sauren pH-Bereich. Starke Laugen neutralisieren die kationische Ladung und verringern die Emulgatorwirksamkeit, was z. B. auf stark basischen Zementoberflächen zu rascher Destabilisierung und frühzeitigem Brechen der Emulsion führt, weshalb man, trotz einer gewissen Tendenz zu höherer Wasserempfindlichkeit der gehärteten Filme, bei Grundierungen und Versiegelungen zementgebundener Beläge und bei der Modifizierung von hydraulisch abbindenden Mörteln auf die o. g. nicht-ionogenen und deshalb alkalistabilen Emulgatoren zurückgreift.

### Beschreibung der Erfindung

Wenngleich, wie oben dargestellt, dem Fachmann sowohl lösemittelhaltige als auch wäßrige Epoxidharze bekannt waren und bereits seit einiger Zeit im Bausektor zu Anstrich- und Beschichtungszwecken eingesetzt werden, so waren doch hinsichtlich des Einsatzes als Dämm- und Ausgleichsmassen noch Unzulänglichkeiten festzustellen, die darin bestehen, daß die notwendige Kombination von Eigenschaften wie gute Verarbeitbarkeit, Alkalibeständigkeit, Wasserfestigkeit, Frühwasserbeständigkeit, ausreichende Offenzeit und gleichzeitig leichte Erkennbarkeit, wann das Ende der Verarbeitungsfähigkeit erreicht ist, Selbstverlaufseigenschaften, hohe Druckfestigkeit, Lager- und Sedimentationsstabilität bei gleichzeitig hoher Füllstoffbindefähigkeit, öko-/toxikologische Unbedenklichkeit nicht erreicht wird.

Aufgabe der vorliegenden Erfindung war es, Dämm- und Ausgleichsmassen bereitzustellen, die sich durch verbesserte anwendungstechnische Eigenschaften gegenüber aus dem Stand der Technik bekannten Systemen auszeichnen.

Unter Ausgleichs- und Dämmassen werden im Rahmen der vorliegenden Erfindung insbesondere Bodenbeschichtungsmassen auf Basis von Epoxidharzen verstanden, die auf Beton-, Holz- oder andere Untergründe aufgebracht, gut und schnell verlaufen und eine ebene Oberfläche ergeben. Sie leisten ggf. zu Schall- und Wärmeschutz im Sinne der Landesbauordnungen (z. B. **"Die neue Bauordnung für Hessen", Hrsg. Hessischer Städte- und Gemeindebund, Kommunale Schriften für Hessen 45, zitiert nach H. Klopfer, *Muß man Industriefußböden wärmedämmen ?* in Industriefußböden '95, Techn. Akademie Esslingen, Ostfildern, 1995)** einen Beitrag. Aus dieser Definition geht hervor, daß Ausgleichs- und Dämmassen zu den Beschichtungszusammensetzungen zu zählen sind.

Gegenstand der vorliegenden Erfindung sind wäßrige Beschichtungszusammensetzungen enthaltend

| | | |
|---|---|---|
| A) | 5,0 bis 50,0 Gew.-% | Epoxidharze, die Umsetzungsprodukte von Bisphenol-A und/oder Bisphenol-F mit Epichlorhydrin darstellen, |
| | | |
| B) | 5,0 bis 55,0 Gew.-% | wasserverdünnbare Epoxidharzhärter, |
| | | |
| C) | 10,0 bis 80,0 Gew.-% | Füllstoffe, |
| | | |
| D) | 0,1 bis 5,0 Gew.-% | Offenzeitverlängerer auf Wachsbasis |
| | | |
| E) | 0,1 bis 5,0 Gew.-% | Rheologieadditive |
| | | |
| F) | 1,0 bis 20,0 Gew.-% | Wasser und |
| | | |
| G) | 0 bis 70 Gew.-% | weitere Zusatzstoffe und/oder Verarbeitungshilfsmittel, |

wobei die Summe der Gewichtsprozente der Komponenten A) bis G) 100 Gew.-% ergibt.

Es sei ausdrücklich angemerkt, daß bezüglich der Komponenten A) bis E) jeweils einzelne Spezies oder Gemische solcher Spezies eingesetzt werden können. Es können also jeweils sowohl ein als auch mehrere Epoxidharze A), Epoxidharzhärter B), Füllstoffe C), Offenzeitverlängerer D) bzw. Rheologieadditive E) eingesetzt werden.

Die Herstellung der Beschichtungszusammensetzungen kann auf jede dem Fachmann bekannte Weise erfolgen. Insbesondere können die Komponenten nacheinander miteinander vermischt werden. Es ist jedoch ebenso möglich, zwei oder mehrere Komponenten zunächst vorzukonfektionieren und in dieser Form mit weiteren Komponenten in Kontakt zu bringen, woraus dann die fertige Beschichtungszusammensetzung resultiert. Diese letztgenannte Variante gilt insbesondere für Komponente F) (=Wasser); Wasser kann auf unterschiedlichste Weise im Zuge der Herstellung der erfindungsgemäßen Beschichtungszusammensetzungen in das Gesamtsystem eingetragen werden; beispielsweise können insbesondere kommerziell verfügbare Verbindungen der Klassen A) bis E) in wäßriger Angebotsform eingesetzt werden. Wasser kann mit anderen Worten sowohl an sich mit den übrigen obligatorisch einzusetzenden Komponenten der Beschichtungszusammensetzung eingetragen werden, es kann jedoch auch in der Weise eingetragen werden, daß man einzelnen oder allen Komponenten A) bis E) in wäßriger Angebotsform einsetzt; auch eine Kombination beider Wege ist möglich.

Die Gew.-%-Angaben für die Komponenten A) bis G) beziehen sich im übrigen stets auf den jeweiligen Wirkstoffgehalt. Wenn beispielsweise eine Beschichtungszusammensetzung hergestellt wird, indem ein oder mehrere Komponenten in wäßriger Angebotsform eingesetzt werden, dann ist im Hinblick auf die Charakterisierung der Zusammensetzung der gesamten Beschichtungszusammensetzung für die einzelnen Komponenten jeweils maßgebend, wieviel Wirksubstanz jeweils vorliegt und nicht, ob im Zuge der Herstellung der Beschichtungszusammensetzung bestimmte Komponenten wasserfrei oder wasserhaltig eingesetzt wurden; der Anteil an Komponente F), also Wasser, ergibt sich dementsprechend in jedem Fall als die Summe des in der gesamten Beschichtungszusammensetzung vorhandenen Wassers.

### Zu Komponente A)

Bei **Komponente A)** der erfindungsgemäßen Beschichtungszusammensetzungen handelt es sich um Epoxidharze, die Umsetzungsprodukte von Bisphenol-A und/oder Bisphenol-F mit Epichlorhydrin darstellen. Derartige Umsetzungsprodukte sind dem Fachmann bekannt. In diesem Zusammenhang sei beispielhaft auf die Publikation **Julia Möckel, Udo Fuhrmann, *Epoxidharze - Schlüsselwerkstoffe für die moderne Technik,* Die Bibliothek der Technik, Band 51, Verlag moderne Industrie, 1990, Seiten 4-7,** verwiesen. Dort ist insbesondere erwähnt, daß die gebräuchlichsten Epoxidharze Kondensationsprodukte von Bisphenol-A und Epichlorhydrin sind, wobei die Länge der bei dieser Reaktion entstehenden Molekülketten abhängt vom eingesetzten Molverhältnis der Ausgangskomponenten und durch den Index n beschrieben wird. Mit steigender Kettenlänge nehmen das Molekulargewicht und gleichzeitig die Viskosität der Verbindungen zu. Unmodifizierte Harze dieses Typs weisen bei 0 > n > 1 bei 20°C (Raumtemperatur) eine flüssige Konsistenz auf, während n bei den entsprechenden Festharzen 2-13 und mehr beträgt. Auch die entsprechenden Bisphenol-F-Harze sind in dieser Druckschrift genannt.

Die flüssigen unmodifizierten Bis-A- bzw. Bis-F-Epoxidharze sind lösemittelfrei, leicht verarbeitbar und haben typischerweise Viskositäten im Bereich von 5.000 bis 15.000 mPas, vorzugsweise 5.000 bis 10.000 mPas (die Angaben von Viskositäten bezieht sich hier und im folgenden auf Messungen in Substanz bei 20 °C, gemessen mit einem Brookfield Viskosimeter). Sie sind kommerziell verfügbar, z. B. unter der Bezeichnung Chem-Res E 30 (Henkel S.p.A, Mailand/I).

Gewünschtenfalls läßt sich die Viskosität solcher Harze durch Zugabe von Reaktivverdünnem weiter erniedrigen, beispielsweise auf 200 mPas. Auch rektivverdünnte Harze sind kommerziell verfügbar, z. B. unter der Bezeichnung Chem-Res E 97 (Henkel S.p.A, Mailand/I). Im Sinne der vorliegenden Erfindung wären solche reaktivverdünnte Harze Mischungen der Komponenten A) und E), da Reaktivverdünner zu den Rheologieadditiven zu zählen sind.

In einer Ausführungsform setzt man als Komponente A) bei 20 °C **flüssige** Epoxidharze des oben genannten Typs (Umsetzungsprodukte von Bisphenol-A und/oder Bisphenol-F mit Epichlorhydrin) ein.

Vorzugsweise setzt man als Komponente A) bei 20 °C flüssige Umsetzungsprodukte von Bisphenol-A mit Epichlorhydrin ein.

In einer Ausführungsform setzt man Komponente A) in einer Menge von 5 bis 30 Gew.% ein.

### Zu Komponente B)

Bei **Komponente B)** der erfindungsgemäßen Beschichtungszusammensetzungen handelt es sich um wasserverdünnbare Epoxidharzhärter. Vorzugsweise werden als Komponente B) Verbindungen eingesetzt, die sich von Addukten auf Basis α,β-ungesättigter Carbonsäureester und Mono-, Di- oder Polyaminopolyalkylenoxid-Verbindungen ableiten. Vorzugsweise werden die Verbindungen B) ausgewählt aus der Gruppe der unten näher beschriebenen Typen B1) bis B3).

**Härter vom Typ B1)** sind dadurch erhältlich, daß man
(a) ein oder mehrere α,β-ungesättigte Carbonsäureester (I)

   R²R³C=C(R⁴)COOR¹ (I)

   worin der Rest R¹ ein aromatischer oder aliphatischer Rest mit bis zu 15 Kohlenstoffatomen, die Reste R², R³ und R⁴ unabhängig voneinander Wasserstoff, verzweigte oder unverzweigte, aliphatische oder aromatische Gruppen mit jeweils bis zu 20 Kohlenstoffatomen oder eine Gruppe -(CH₂)ₙ-COOR¹, worin R¹ die oben genannte Bedeutung hat und n eine Zahl im Bereich von 0 und 10 ist, bedeuten, in Gegenwart eines Umesterungskatalysators mit
(b) ein oder mehreren Hydroxyverbindungen umsetzt, wobei man die Verbindungen (a) und (b) in solchen Mengen einsetzt, daß das Äquivalentverhältnis der Hydroxylgruppen in (b) zu den Estergruppen COOR¹ in den α,β-ungesättigten Carbonsäureestem (a) im Bereich von 1,5:1 bis 10:1 liegt,
   das hierbei erhaltene Zwischenprodukt Z1 mit
(c) ein oder mehreren Mono-, Di- oder Polyaminopolyalkylenoxid-Verbindungen umsetzt, wobei man ein Äquivalentverhältnis der reaktiven H-Atome an den Aminostickstoffatomen von (c) zu den Estergruppen in der Zwischenverbindung Z1 im Bereich von 10:1 bis 1:10 einstellt,
   das hierbei erhaltene Zwischenprodukt Z2 anschließend mit
(d) ein oder mehreren Polyepoxiden umsetzt, wobei man das Äquivalentverhältnis von Oxiranringen in Polyepoxid (d) zu reaktiven Wasserstoffatomen der gemäß (c) eingesetzten Mono-, Di- oder Polyaminopolyalkylenoxid-Verbindungen auf einen Wert im Bereich von 100 : 1 und 1,5 : 1 einstellt
   und das hierbei erhaltene Zwischenprodukt Z3 anschließend mit
(e) ein oder mehreren primären und/oder sekundären Aminen umsetzt, wobei man das Äquivalentverhältnis von Oxiranringen in Zwischenprodukt Z3 zu den reaktiven H-Atomen an den Aminostickstoffatomen von (e) auf einen Wert im Bereich von 1 : 1,5 bis 1 : 20 einstellt.

Die erfindungsgemäßen Härter stellen je nach ihrem Molekulargewicht entweder flüssige oder feste Substanzen dar.

Der Ausdruck "Äquivalentverhältnis" ist dem Fachmann geläufig. Der grundlegende Gedanke hinter dem Begriff des Äquivalents ist der, daß man für jede an einer Reaktion beteiligten Substanz die an der angestrebten Reaktion beteiligten reaktiven Gruppen betrachtet. Durch die Angabe eines Äquivalentverhältnisses drückt man dann aus, in welchem Zahlenverhältnis die Gesamtheit der reaktiven Gruppen der eingesetzten Verbindungen (x) und (y) zueinander stehen. Dabei ist darauf zu achten, daß unter einer reaktiven Gruppe die kleinstmögliche reaktionsfähige Gruppe zu verstehen ist - der Begriff der reaktiven Gruppe ist also nicht deckungsgleich mit dem Begriff der funktionellen Gruppe. Bei H-aciden Verbindungen bedeutet das etwa, daß zwar OH-Gruppen oder NH-Gruppen solche reaktiven Gruppen darstellen, nicht aber NH₂-Gruppen, bei denen zwei reaktive H-Atome am selben Stickstoffatom sitzen. Hier werden sinnvollerweise innerhalb der funktionellen Gruppe NH₂ die beiden Wasserstoffatome als reaktive Gruppe betrachtet, so daß die funktionelle Gruppe NH₂ zwei reaktive Gruppen, nämlich die Wasserstoffatome, aufweist.

In einer Ausführungsform setzt man die Zwischenverbindung Z1 und die Verbindung (c) in solchen Mengen ein, daß das Äquivalentverhältnis der reaktiven H-Atome an den Aminostickstoffatomen von (c) zu den Estergruppen in der Zwischenverbindung Z1 im Bereich von 4 : 1 bis 1 : 4 und insbesondere von 2,5 : 1 bis 1,5 : 1 liegt.

In einer Ausführungsform stellt man das Äquivalentverhältnis von Oxiranringen in Polyepoxid (d) zu reaktiven Wasserstoffatomen der gemäß (c) eingesetzten Mono-, Di- oder Polyaminopolyalkylenoxid-Verbindungen auf einen Wert im Bereich von 50:1 bis 10:1 ein.

Beispiele für die erfindungsgemäß einzusetzenden **α,β-ungesättigten Carbonsäureester (a)** der oben genannten Struktur (I) sind Acrylsäuremethylester, Acrylsäureethylester, Maleinsäuredimethylester, Maleinsäurediethylester, Fumarsäure-dimethylester, Fumarsäurediethylester, Itaconsäuredimethylester, Itaconsäurediethylester. Besonders bevorzugt sind dabei als Verbindungen (a) Maleinsäuredialkylester, insbesondere Maleinsäurediethylester und Maleinsäuredimethylester.

**Die Hydroxyverbindungen (b)** können aliphatisch oder aromatisch sein. Die Verbindungen (b) sollten inert gegenüber Umesterungskatalysatoren sein.

Beispiele für geeignete **aromatische Verbindungen (b)** sind: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxydiphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungs- und Bromierungsprodukte der vorstehend genannten Verbindungen. Bisphenol A ist als aromatische Verbindung (b) bevorzugt.

In einer bevorzugten Ausführungsform wählt man die Hydroxyverbindungen (b) aus der Klasse der Fettalkohole, Alkandiole und Polyetherdiole. Gewünschtenfalls können diese Verbindungen auch alkoxyliert sein.

Bei den **Fettalkoholen** handelt es sich um primäre Alkohole mit 6 bis 36 C-Atomen, die gesättigt oder olefinisch ungesättigt sein können. Beispiele für geeignete Fettalkohole sind Hexanol, Heptanol, Octanol, Pelargonalkohol, Decanol, Undecanol, Laurylalkohol, Tridecanol, Myristinalkohol, Pentadecanol, Palmitylalkohol, Heptadecanol, Stearylalkohol, Nonadecanol, Arachidylalkohol, Heneicosanol, Behenylalkohol, Tricosanol, Lignocerylalkohol, 10-Undecanol, Oleylalkohol, Elaidylalkohol, Ricinolalkohol, Linoleylalkohol, Linolenylalkohol, Gadoleylalkohol, Arachidonalkohol, Erucaalkohol, Brassidylalkohol.

Bei den **Alkandiolen** handelt es sich um Verbindungen der allgemeinen Struktur HOCH₂-R⁵-CH₂OH, worin der Rest R⁵ ein hydrophober Kohlenwasserstoffrest ist, der gesättigt oder ungesättigt, geradkettig oder verzweigt sein kann und gegebenenfalls auch aromatische Strukturelemente enthalten kann. Beispiele sind 1,6-Hexandiol, 1,7-Heptandiol und 1,8-Octandiol, ferner Polyoxytetramethylendiole - auch als Polytetrahydrofurane bekannt - sowie die sogenannten Dimerdiole. Die Dimerdiole sind im Rahmen der vorliegenden Erfindung ganz besonders bevorzugt.

**Dimerdiole** sind seit langem bekannte und im Handel erhältliche Verbindungen, die beispielsweise durch Reduktion von Dimerfettsäureestem gewonnen werden. Die diesen Dimerfettsäureestern zu Grunde liegenden Dimerfettsäuren sind Carbonsäuren, die durch Oligomerisierung ungesättigter Carbonsäuren, in der Regel Fettsäuren wie Ölsäure, Linolsäure, Erucasäure und dergleichen, zugänglich sind. Üblicherweise erfolgt die Oligomerisierung bei erhöhter Temperatur in Gegenwart eines Katalysators aus etwa Tonerde. Die dabei erhaltenen Substanzen - Dimerfettsäuren technischer Qualität - stellen Gemische dar, wobei die Dimerisierungsprodukte überwiegen. Jedoch sind auch geringe Anteile höherer Oligomerer, insbesondere die Trimerfettsäuren, enthalten. Dimerfettsäuren sind handelsübliche Produkte und werden in verschiedenen Zusammensetzungen und Qualitäten angeboten. Zu Dimerfettsäuren existiert eine reichhaltige Literatur. Beispielhaft seien hier folgende Artikel zitiert: **Fette & Öle 26 (1994), Seiten 47-51; Speciality Chemicals 1984 (Mai-Heft), Seiten 17,18, 22-24.** Dimerdiole sind in der Fachwelt gut bekannt. Beispielhaft sei hierzu auf einen jüngeren Artikel verwiesen, in dem unter anderem Herstellung, Struktur und Chemie der Dimerdiole behandelt werden: **Fat Sei. Technol. 95 (1993) Nr.3, Seiten 91 - 94.** Im Rahmen der vorliegenden Erfindung sind diejenigen Dimerdiole bevorzugt, die einen Dimergehalt von mindestens 50% und insbesondere 75% aufweisen und bei denen die Zahl der C-Atome pro Dimermolekül überwiegend im Bereich von 36 bis 44 liegt.

Unter **Polyetherdiolen** werden im Rahmen der vorliegenden Erfindung Diole der allgemeinen Struktur HOCH₂-R⁶-CH₂OH verstanden, worin der Rest R⁶ ein hydrophober Kohlenwasserstoffrest ist, der gesättigt oder ungesättigt, geradkettig oder verzweigt sein kann und gegebenenfalls auch aromatische Strukturelemente enthalten kann und bei dem zwingend ein oder mehrere CH₂-Einheiten jeweils durch ein Sauerstoffatom ersetzt sind.

Eine besonders attraktive Klasse von Polyetherdiolen ist durch Alkoxylierung von Alkandiolen wie 1,2-Ethandiol, 1,3-Propandiol, 1,2-Propandiol, 1,4-Butandiol, 1,3-Butandiol, 1,5-Pentandiol, 1,6-Hexandiol, 1,7-Heptandiol und 1,8-Octandiol, Polyoxytetramethylendiolen (Polytetrahydrofuranen) und Dimerdiolen zugänglich. Bei der Herstellung dieser alkoxylierten Diole geht man üblicherweise wie folgt vor: In einem ersten Schritt bringt man das gewünschte Diol mit Ethylenoxid und/oder Propylenoxid in Kontakt und setzt dieses Gemisch in Gegenwart eines alkalischen Katalysators und Temperaturen im Bereich von 20 bis 200 °C um. Auf diese Weise werden Anlagerungsprodukte von Ethylenoxid (EO) und/oder Propylenoxid (PO) an das eingesetzte Diol erhalten. Bei den Additionsprodukten handelt es sich mithin um EO-Addukte oder um PO-Addukte oder um EO/PO-Addukte an das jeweilige Diol; bei den EO/PO-Addukten kann dabei die Anlagerung von EO und PO statistisch oder blockweise erfolgen.

Als **Umesterungskatalysatoren** kommen für die Umsetzung der Verbindungen (a) und (b) an sich alle dem Fachmann aus dem Stand der Technik bekannten Umesterungskatalysatoren in Frage. Beispiele für geeignete Katalysatoren sind Natriummethylat, Dibutylzinndiacetat, Tetraisopropylorthotitanat. Die Katalysatoren können nach der Umesterung gewünschtenfalls deaktiviert werden, dies ist jedoch nicht zwingend erforderlich.

Als **Aminokomponenten (c)** dienen Mono-, Di- oder Polyaminopolyalkylenoxid-Verbindungen. Darunter ist zu verstehen, daß diese Verbindungen einerseits ein, zwei oder mehrere Amino-Funktionen (NH- bzw. NH₂-Funktionen), andererseits Alkylenoxid-Bausteine enthalten. Bei den letztgenannten Bausteinen handelt es sich insbesondere um Ethylenoxid, Propylenoxid und Butylenoxid, wobei Ethylenoxid und Propylenoxid besonders bevorzugt sind. Die Verbindungen (c) sind zumindest teilweise bei 20 °C in Wasser lösliche Substanzen.

Die Herstellung der Verbindungen (c) ist aus dem Stand der Technik bekannt und schließt die Umsetzung von Hydroxylgruppen-enthaltenden Verbindungen mit Alkylenoxiden ein, nebst anschließender Umwandlung der resultierenden terminalen Hydroxylgruppen in Aminogruppen.

Bezüglich der Umsetzung von Hydroxylgruppen-enthaltenden Verbindungen mit Alkylenoxiden sind die Ethoxylierung und die Propoxylierung von besonderer Bedeutung. Hierbei geht man üblicherweise wie folgt vor: In einem ersten Schritt bringt man die gewünschte Hydroxylgruppen-enthaltenden Verbindungen mit Ethylenoxid und/oder Propylenoxid in Kontakt und setzt dieses Gemisch in Gegenwart eines alkalischen Katalysators und Temperaturen im Bereich von 20 bis 200 °C um. Auf diese Weise werden Anlagerungsprodukte von Ethylenoxid (EO) und/oder Propylenoxid (PO) erhalten. Bei den Additionsprodukten handelt es sich vorzugsweise um EO-Addukte oder um PO-Addukte oder um EO/PO-Addukte an die jeweilige Hydroxylgruppen-enthaltenden Verbindung; bei den EO/PO-Addukten kann dabei die Anlagerung von EO und PO statistisch oder blockweise erfolgen.

In einer Ausführungsform setzt man als Verbindungen (c) Substanzen der allgemeinen Struktur R⁸-O-R⁹-CH₂CH(R¹⁰)-NH₂ ein. Darin bedeuten:
- R⁸ eine einwertige organische Gruppe mit 1-12 C-Atomen, die aliphatisch, cycloaliphatisch oder aromatisch sein kann
- R⁹ eine Polyoxyalkylengruppe, die aus 5-200 Polyoxyalkyleneinheiten, insbesondere EO- und/oder PO-Einheiten, aufgebaut ist
- R¹⁰ Wasserstoff oder ein aliphatischer Rest mit bis zu 4 C-Atomen.

Besonders geeignete Vertreter der Verbindungen (c) sind im Rahmen der vorliegenden Erfindung die dem Fachmann bekannten "Jeffamine" , bei denen es sich um handelsübliche Substanzen handelt. Beispielhaft sei hier "Jeffamin 2070" genannt, das nach Angaben der Firma Texaco durch Umsetzung von Methanol mit Ethylenoxid und Propylenoxid nebst Umwandlung der terminalen Hydroxylgruppen des zunächst erhaltenen Zwischenproduktes in Amingruppen hergestellt wird (vergleiche **WO 96/20971,** Seite 10, Zeilen 12-15).

Die Verbindungen (c) haben vorzugsweise mittlere Molekulargewichte (Zahlenmittel; Mn) im Bereich von 148 bis 5000, insbesondere zwischen 400 und 2000.

Bei den **Epoxidverbindungen (d)** handelt es sich um Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch oder heterocyclisch sein und auch Hydroxylgruppen aufweisen. Sie können weiterhin solche Substituenten enthalten, die unter den Mischungs- und Reaktionsbedingungen keine störenden Nebenreaktionen verursachen, beispielsweise Alkyl- oder Arylsubstituenten, Ethergruppierungen und ähnliche. Vorzugsweise handelt es sich bei diesen Epoxidverbindungen um Polyglycidylether auf der Basis von mehrwertigen, vorzugsweise zweiwertigen Alkoholen, Phenolen Hydrierungsprodukten dieser Phenole und/oder von Novolacken (Umsetzungsprodukte von ein- oder mehrwehrtigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 160 und 500, insbesondere zwischen 170 und 250. Das Epoxidäquivalentgewicht einer Substanz ist dabei als diejenige Menge der Substanz (in Gramm) definiert, welche 1 mol Oxiranringe enthält. Als mehrwertige Phenole kommen vorzugsweise folgende Verbindungen in Frage: Resorcin, Hydrochinon, 2,2-Bis-(4-hydroxyphenyl)propan (Bisphenol A), Isomerengemische des Dihydroxydiphenylmethans (Bisphenol F), Tetrabrombisphenol A, 4,4'-dihydroxy-diphenylcyclohexan, 4,4'-dihydroxy-3,3-dimethyldiphenylpropan, 4,4'-Dihydroxydiphenyl, 4,4'-Dihydroxy-benzophenol, Bis-(4-hydroxyphenyl)-1,1-ethan, Bis-(4-hydroxyphenyl)-1,1-isobutan, Bis-(4-hydroxyphenyl)-methan, Bis-(4-hydroxyphenyl)-ether, Bis-(4-hydroxy-phenyl)-sulfon u.a. sowie die Chlorierungs- und Bromierungsprodukte der vorstehend genannten Verbindungen; Bisphenol A ist dabei ganz besonderes bevorzugt.

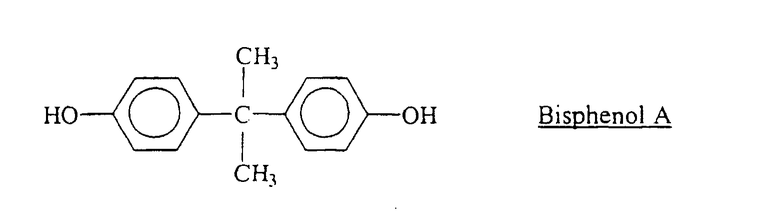

Auch die Polyglycidylether von mehrwertigen Alkoholen sind als Verbindungen (d) geeignet. Als Beispiele derartiger mehrwertiger Alkohole seien Ethylenglykol, Diethylenglykol, Triethylenglykol, 1,2-Propylenglykol, Polyoxypropylenglykole (n = 1 - 20), 1,3-Propylenglykol, 1,4-Butylenglykol, 1,5-Pentandiol, 1,6-Hexandiol, 1,2,6-Hexantriol, Glycerin und Bis-(4-hydroxycyclohexyl)-2,2-propan genannt.

Es können auch Polyglycidylether von Polycarbonsäuren als Verbindungen (d) verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Beispiele sind Adipinsäurediglycidylester, Phthalsäurediglycidylester und Hexahydrophthalsäurediglycidylester.

Eine ausführliche Aufzählung geeigneter Epoxidverbindungen (d) findet sich in:
- **A.M. Paquin, Handbuch "Epoxidverbindungen und Epoxidharze",** Springer-Verlag, Berlin 1958, Kapitel V, Seiten 308 bis 461; ferner in:
- **Lee, Neville "Handbook of Epoxy Resins",** 1967, Kapitel 2, Seiten 2-1 bis 2-33.

Es können auch Mischungen von mehreren Epoxidverbindungen (d) verwendet werden.

Als Amine (e) kommen im Rahmen der vorliegenden Erfindung primäre und/oder sekundäre Amine zum Einsatz. Vorzugsweise setzt man als Amine (e) Polyamine mit mindestens zwei Stickstoffatomen und mindestens zwei aktiven Amino-Wasserstoffatomen pro Molekül ein. Es können aliphatische, aromatische. aliphatisch-aromatische, cycloaliphatische und heterocyclische Di- und Polyamine benutzt werden.

Beispiele für geeignete Amine (e) sind: Polyethylenamine (Ethylendiamin, Diethylentriamin, Triethylentetramin, Tetraethylenpentamin, usw.), 1,2-Propylendiamin, 1,3-Propylendiamin, 1,4-Butandiamin, 1,5-Pentandiamin, 1,3-Pentandiamin, 1,6-Hexandiamin, 3,3,5-Trimethyl-1,6-hexandiamin, 3,5,5-Trimethyl-1,6-hexandiamin, 2-Methyl-1,5-pentandiamin, Bis(3-aminopropyl)amin, N,N'-Bis(3-aminopropyl)-1,2-ethandiamin, N-(3-aminopropyl)-1,2-ethandiamin, 1,2-diaminocyclohexan, 1,3-Diaminocyclohexan, 1,4-Diaminocyclohexan, Aminoethylpiperazine, die Poly(alkylenoxid)diamine und Triamine (wie z.B. Jeffamine D-230, Jeffamine D-400, Jeffamine D-2000, Jeffamine D-4000, Jeffamine T-403, Jeffamine EDR-148, Jeffamine EDR-192, Jeffamine C-346, Jeffamine ED-600, Jeffamine ED-900, Jeffamine ED-2001), meta-Xylylendiamin, Phenylendiamin, 4,4'-Diaminodiphenylmethan, Toluoldiamin, Isophorondiamin, 3,3'-Dimethyl-4,4'-diaminodicyclohexylmethan, 4,4'-Diaminodicyclohexylmethan, 2,4'-Diaminodicyclohexylmethan, die Mischung der über eine Methylenbrücke verknüpften Poly(cyclohexyl-aromischen)amine (auch als MBPCAA bekannt) und und Polyaminoamide.
Des weiteren kommen als Verbindungen (e) auch die Reaktionsprodukte der Umsetzung der gerade genannten Amine mit den oben beschriebenen α,β-ungesättigten Carbonsäureestern (a) in Frage, ferner die Reaktionsprodukte der Umsetzung gerade genannten Amine mit den oben beschriebenen Polyepoxidverbindungen (d).

**Härter vom Typ B2)** sind dadurch erhältlich, daß man
(a) ein oder mehrere α,β-ungesättigte Carbonsäureester (I)

   R²R³C=C(R⁴)COOR¹ (I)

   worin der Rest R¹ ein aromatischer oder aliphatischer Rest mit bis zu 15 Kohlenstoffatomen, die Reste R², R³ und R⁴ unabhängig voneinander Wasserstoff, verzweigte oder unverzweigte, aliphatische oder aromatische Gruppen mit jeweils bis zu 20 Kohlenstoffatomen oder eine Gruppe -(CH₂)ₙ-COOR¹, worin R¹ die oben genannte Bedeutung hat und n eine Zahl im Bereich von 0 und 10 ist, bedeuten, mit
(c) ein oder mehreren Mono-, Di- oder Polyaminopolyalkylenoxid-Verbindungen umsetzt, wobei man die Verbindungen (a) und (c) in solchen Mengen einsetzt, daß das Äquivalentverhältnis der reaktiven H-Atome an den Aminostickstoffatomen von (c) zu der in Bezug auf die in der Formel (I) dargestellte zur Gruppe COOR¹ α,β-positionierte C=C-Doppelbindung in den Carbonsäureestern (a) im Bereich von 10:1 bis 1:10 liegt,
   das hierbei erhaltene Zwischenprodukt Z4 anschließend mit
(d) ein oder mehreren Polyepoxiden umsetzt, wobei man das Äquivalentverhältnis von Oxiranringen in Polyepoxid (d) zu reaktiven Wasserstoffatomen der gemäß (c) eingesetzten Mono-, Di- oder Polyaminopolyalkylenoxid-Verbindungen auf einen Wert im Bereich von 100 : 1 und 1,5 : 1 einstellt
   und das hierbei erhaltene Zwischenprodukt Z5 anschließend mit
(e) ein oder mehreren primären und/oder sekundären Aminen umsetzt, wobei man das Äquivalentverhältnis von Oxiranringen in Zwischenprodukt Z5 zu den reaktiven H-Atomen an den Aminostickstoffatomen von (e) auf einen Wert im Bereich von 1 : 1,5 bis 1 : 20 einstellt.

Für die Substanzen (a) sowie die Substanzen (c) bis (e) gilt ansonsten das oben - für Härter vom Typ B1) - Gesagte.

**Härter vom Typ B3)** sind dadurch erhältlich, daß man
(a) ein oder mehrere α,β-ungesättigte Carbonsäureester (I)

   R²R³C=C(R⁴)COOR¹ (I)

   worin der Rest R¹ ein aromatischer oder aliphatischer Rest mit bis zu 15 Kohlenstoffatomen, die Reste R², R³ und R⁴ unabhängig voneinander Wasserstoff, verzweigte oder unverzweigte, aliphatische oder aromatische Gruppen mit jeweils bis zu 20 Kohlenstoffatomen oder eine Gruppe -(CH₂)ₙ-COOR¹, worin R¹ die oben genannte Bedeutung hat und n eine Zahl im Bereich von 0 und 10 ist, bedeuten, mit
(c) ein oder mehreren Mono-, Di- oder Polyaminopolyalkylenoxid-Verbindungen umsetzt, wobei man die Verbindungen (a) und (c) in solchen Mengen einsetzt, daß das Äquivalentverhältnis der reaktiven H-Atome an den Aminostickstoffatomen von (c) zu der in Bezug auf die in der Formel (I) dargestellte zur Gruppe COOR¹ α,β-positionierte C=C-Doppelbindung in den Carbonsäureestern (a) im Bereich von 10:1 bis 1:10 liegt,
   das dabei zunächst erhaltene Zwischenprodukt Z4 anschließend mit
(g) ein oder mehreren Polyhydroxyverbindungen umsetzt, wobei man das Äquivalentverhältnis von Estergruppen in Zwischenverbindung Z4 zu Hydroxygruppen in Polyhydroxyverbindung (g) auf einen Wert im Bereich von 1 : 1,1 bis 1 : 10 einstellt
   und das hierbei erhaltene Zwischenprodukt Z6 anschließend mit
(d) ein oder mehreren Polyepoxiden umsetzt, wobei man das Äquivalentverhältnis von Oxiranringen in Polyepoxid (d) zu Hydroxylgruppen in Zwischenprodukt Z6 auf einen Wert im Bereich von 1,5 : 1 und 6 : 1 einstellt
   und das hierbei erhaltene Zwischenprodukt Z7 anschließend mit
(e) ein oder mehreren primären und/oder sekundären Aminen umsetzt, wobei man das Äquivalentverhältnis von Oxiranringen in Zwischenprodukt Z7 zu den reaktiven H-Atomen an den Aminostickstoffatomen von (e) auf einen Wert im Bereich von 1 : 1,5 bis 1 : 20 einstellt.

Für die Substanzen (a) und die Substanzen (c) bis (e) gilt ansonsten das oben - für Härter vom Typ B1) - Gesagte.

Die Polyhydroxyverbindungen (g) können aliphatisch oder aromatisch sein. In einer Ausführungsform wählt man die Polyhydroxyverbindungen (g) aus der Klasse spezieller aliphatischer Diole und zwar der Alkandiole - insbesondere der Dimerdiole - Polyetherdiole und Polyesterdiole. Für die Alkandiole - einschließlich der Dimerdiole - und die Polyetherdiole gilt das oben - für Härter vom Typ B1) in Bezug auf Komponente (b) - Gesagte. Für die Polyesterdiole gilt folgendes: Unter Polyesterdiolen werden im Rahmen der vorliegenden Erfindung Diole der allgemeinen Struktur HOCH₂-R⁷-CH₂OH verstanden, worin der Rest R⁷ ein hydrophober Kohlenwasserstoffrest ist, der gesättigt oder ungesättigt, geradkettig oder verzweigt sein kann und gegebenenfalls auch aromatische Strukturelemente enthalten kann und bei dem zwingend ein oder mehrere CH₂-Einheiten jeweils durch eine COO-Einheit ersetzt sind. Zur Herstellung werden üblicherweise difunktionelle Polyole mit Dicarbonsäuren oder deren Anhydriden umgesetzt. Häufig verwendete Polyole sind Ethylenglykol, 1,2-Propandiol, 1,4-Butandiol, 1,6-Hexandiol. Übliche Dicarbonsäuren sind Bernsteinsäure, Adipinsäure, Phthalsäureanhydrid. Besonders bevorzugt sind dabei 1,6-Hexandiol-Adipinsäurepolyester.

In einer Ausführungsform setzt man Komponente B) in einer Menge von 5 bis 25 Gew.% ein.

### Zu Komponente C)

Bei **Komponente C)** der erfindungsgemäßen Beschichtungszusammensetzungen handelt es sich um Füllstoffe.

Füllstoffe dienen zur Verbilligung der Basisrezeptur sowie zur Erzielung spezieller Oberflächeneffekte.

Die Kombination der Füllstoffe hat einen entscheidenen Einfluß auf die Lagerstabilität sowie auf die chemische Beständigkeit der fertigen Beschichtung. Naturgemäß zeigen Calciumcarbonate bei dieser Anwendung geringere chemische Stabilitäten gegen sauer reagierende Chemikalien.

Sand, ein wichtiger Füllstoff zur Erzielung der notwendigen Schichtstärken, scheidet aufgrund seiner groben Teilchenstruktur, im Vergleich zu herkömmlichen Füllstoffen, als alleiniges Füllmaterial aus. Die Kombination mit anderen inerten Zuschlagsstoffen reduziert dieses Verhalten nur zu einem geringen Anteil, kann das schlechte Absetzverhalten aber nicht kompensieren, wenn gute Applikationseigenschaften gleichzeitig beibehalten werden sollen. Der Einsatz der Füllstoffe ist aber unverzichtbar um besondere Oberflächeneffekte zu erzielen. Der Glanzgrad und der Preis einer Beschichtung sowie die schon erwähnte chemische Beständigkeit sind abhängige Faktoren, die an den Einsatz einer richtigen Füllstoffkombination gebunden sind.

Die zum Einsatz kommenden Füllstoffe sind von unterschiedlicher chemischer Natur. Es können beispielsweise Bariumsulfate, Quarzmehle, Aluminiumsilikate, natürliche oder synthetische Calciumcarbonate, Silikate, Calciumsulfat, Talkum, Kaolin, Glimmer, Feldspat, Metalle und Metalloxide, Aluminiumhydroxid, Ruß, Graphit und weitere, dem Fachmann einschlägig bekannte Füllstoffe eingesetzt werden.

Geeignete Füllstoffe besitzen insbesondere ein spezifisches Gewicht von 2-3 g/cm³, vorzugsweise 2,4-2,7 g/cm³. Die Schüttdichte liegt insbesondere zwischen 0,6-1,0 g/cm³.

Zur Vermeidung von Absetzproblemen und zur Einstellung der wichtigen Verarbeitungsviskosität kommen insbesondere Füllstoff mit Kornverteilungen von 0-100 µm, vorzugsweise 0-50 µm, zum Einsatz. Die Kornverteilung ist eine Verteilungsfunktion der Partikelgrössen. Die Bestimmung erfolgt mittels Partikelgrössenanalyse, die Darstellung in einer Partikelgrössenverteilungskurve (z.B. Kornverteilungskurve durch Siebanalyse nach DIN 66165-1: 1097-04).

Ganz besonders eignen sich als Komponente C) folgende Kombinationen: Quarzsand/Minex S 20, Quarzsand/Schwerspat C 14 oder Quarzsand/Calcicoll W 7. Bezüglich der Handelsnamen sei auf den Beispielteil verwiesen.

In einer Ausführungsform setzt man Komponente C) in einer Menge von 50 bis 70 Gew.% ein.

### Zu Komponente D)

Bei **Komponente D)** der erfindungsgemäßen Beschichtungszusammensetzungen handelt es sich um sogenannte Offenzeitverlängerer auf Wachsbasis. Derartige Systeme sind dem Fachmann bekannt, (zum Begriff der Wachse siehe zum Beispiel **U. Zorll, Hrsg., *RÖMPP - Lexikon, Lacke und Druckfarben*, s. 615, Georg Thieme Verl., Stuttgart, New York, 1998).** Zur Verlängerung der Offenzeit, zur Erhöhung von Geschmeidigkeit und Plastizität der Füll- und Dämmassen werden nämlich bei der Verarbeitung Wachse in Form wäßriger Emulsionen oder in fester Angebotsform auf mineralische Trägermaterialien eingesetzt. Dabei sind unter dem Begriff Wachse sowohl die Wachse im engeren Sinne als auch Fettalkohole zu verstehen.

**In R. Neumann, H.-G. Schulte, R. Höfer, *Pulver,* das *Eigenschaften schafft*, Bautenschutz und Bausanierung, Heft 3/1999, S. 22-27** sowie in **U. Nagorny, *Extension of workability of synthetic resin plasters with additives based on fatty raw materials*; ConChem-Journal, Nr. 1/1994, S. 23-26).** sind solche Verarbeitungsadditive auf Wachsbasis eingehend beschrieben. Insbesondere eignen sich pulverförmige Darreichungsformen von Offenzeitverlängerern auf Wachsbasis, insbesondere auf einen festen Träger aufgezogene Fettalkohole mit 16 bis 72 C-Atomen pro Molekül. In diesem Zusammenhang sei ausdrücklich auf die Offenbarung der **WO 98/49114** verwiesen.
Besonders geeignete Offenzeitverlängerer auf Wachsbasis sind die kommerziell von der Cognis Deutschland GmbH, Düsseldorf/DE vertriebenen Produkte Loxanol® 842 DP (wäßrige Dispersion) und Loxanol® P (wasserfreier, pulverförmiger Feststoff).

In einer Ausführungsform setzt man Komponente D) in einer Menge von 0,1 bis 2,0 Gew.% ein.

### Zu Komponente E)

Bei **Komponente E)** der erfindungsgemäßen Beschichtungszusammensetzungen handelt es sich um Rheologieadditive. Hier lassen sich an sich alle dem Fachmann einschlägig bekannten Rheologieadditive einsetzen, vorzugsweise Schichtsilikate oder Poly(meth)acrylate oder Celluloseether oder sogenannte assoziative Verdickungsmittel allein oder in Kombination.

Bevorzugt sind Schichtsilikate in Kombination mit hydrophob modifizierten Polyetherurethanen (HEUR) oder hydrophob modifizierten Polyethem (HMPE). Unter hydrophober Modifikation ist dabei zu verstehen, daß hydrophobe Gruppen in den Molekülen der genannten Substanzklassen enthalten sind. Besonders bevorzugte HEUR sind die in G. Schulte, J. Schmitz, R. Höfer, ***Additive für wäßrige Systeme und umweltfreundliche Lacke,*** Welt der Farben, 28 - 31 (12/1997) beschriebenen lösemittelfreien HEUR und die in **DE-A-42 42687** beschriebenen pseudoplastischen HEUR.

In einer Ausführungsform setzt man Komponente E) in einer Menge von 0,1 bis 3,0 Gew.% ein.

### Zu Komponente F)

**Komponente F)** der erfindungsgemäßen Beschichtungszusammensetzungen (Wasser) wird vorzugsweise in einer Menge von 1,0 bis 12,0 Gew.% eingesetzt.

### Zu Komponente G)

Als **Komponente G)** der erfindungsgemäßen Beschichtungszusammensetzungen können weitere dem Fachmann bekannte Zusatzstoffe und/oder Verarbeitungshilfsmittel eingesetzt werden. Beispiele hierfür sind Pigmente, Zement, Kies, Entlüfter, Entschäumer, Dispergierhilfsmittel, Antiabsetzmittel, Beschleuniger, freie Amine, Verlaufsadditive, Leitfähigkeitsverbesserer.

Ein weiterer Gegenstand der Erfindung ist die Verwendung der oben beschriebenen Beschichtungszusammensetzungen als Ausgleichs- und Dämmassen, insbesondere im Bausektor. Dabei ist der Einsatz für Fußböden besonders bevorzugt.

### Beispiele

### 1. Eingesetzte Substanzen

**Waterpoxy 751:** ein in Wasser gelöstes, isoliertes Amin-Addukt, das zur Härtung von Epoxidharzemulsionen und flüssigen Standard-Epoxidharzen verwendet wird (Henkel KGaA, Düsseldorf/DE)
**Minex S 20:** Nehpehlinsyenit (Quarzwerke GmbH, Frechen/DE)
**Quarzsand H 33:** Haltener Quarzsand ( Quarzwerke GmbH, Frechen/DE)
**Schwerspatmehl C 14:** Bariumsulfat ( Sachtleben Chemie GmbH, Duisburg/DE)
**Calcicoll W7:** natürliches, kristallines Calciumcarbonat ( Alpha Calcit Füllstoff GmbH, Köln/DE)
**Bentone EW:** rheologisches Additiv auf Basis eines hochgereinigten, leicht dispergierbaren Smektits (Rheox Inc., Hightstown, NY/USA)
**Heucosin Grau** (Typ G 3011 N): Pigmentzusammensetzung ( Dr. hans Heubach GmbH, Langelsheim/DE)
**Dowanol TPM:** Tripropylenglykolmonomethylether, Isomerengemisch ( Reininghaus-Chemic GmbH, Essen/DE)
**Loxanol DPN:** flüssige Emulsion zur Verlängerung der Offenzeit (Henkel KGaA, Düsseldor/DE)
**Foamaster 223:** Entschäumer für geruchsarme Dispersionsfarben (Henkel KGaA, Düsseldor/DE)
**Nopco DSX 1550:** nichtionogenes Rheologieadditiv für wäßrige Anstrichstoffe; Polyurethanpolymer in Wasser/Butoxydiglykol
**Chem-Res E 30:** mittelviskoses, flüssiges Epoxidharz auf Basis von Bisphenol A/F (Henkel KGaA, Düsseldorf/DE)

### 2. Rezepturen

### Beispiel 1

Man stellt eine Mischung der in Tabelle 1 genannten Komponenten her, wobei man die genannten Komponenten nacheinander mittels eines Dissolvers zusammenrührt. Zu 100 Gewichtsteilen dieser Mischung gibt man 15 Gewichtsteile Chem-Res E 30 (hierbei handelt es sich um Komponente A) der erfindungsgemäßen Beschichtungszusammensetzung).

**Tabelle 1**

| **Menge** **[Gew.-%]** | **Substanz** | **Komponente** |
|---|---|---|
| 17,9 | Waterpoxy 751 | B) |
| 41,1 | Quarzsand H 33 | C) |
| 20,0 | Schwerspat C 14 | C) |
| 8,5 | Heucosin Grau | Pigment |
| 1,1 | Foamaster 223 | Entschäumer |
| 0,1 | Nopco DSX 1550 | E) |
| 1,0 | Bentone EW (3%-ig) | E) |
| 0,8 | Loxanol DPN | D) |
| 0,4 | Dowanol TPM | D) |
| 9,1 | Wasser | F) |

Lediglich der Vollständigkeit halber sei angemerkt, daß die im Gesamtsystem vorhandene Menge Wasser (Komponente F der erfindungsgemäßen Beschichtungszusammensetzung) natürlich nicht allein der in der letzten Spalte der Tabelle 1 angegebenen Menge entspricht, da ein beachtlicher Teil Wasser ja auch über die Komponente B) eingetragen wurde.

### Beispiel 2

Man stellt eine Mischung der in Tabelle 2 genannten Komponenten her, wobei man die genannten Komponenten nacheinander mittels eines Dissolvers zusammenrührt. Zu 100 Gewichtsteilen dieser Mischung gibt man 15 Gewichtsteile Chem-Res E 30 (hierbei handelt es sich um Komponente A) der erfindungsgemäßen Beschichtungszusammensetzung).

**Tabelle 2**

| **Menge** **[Gew.-%]** | **Substanz** | **Komponente** |
|---|---|---|
| 17,9 | Waterpoxy 751 | B) |
| 41,1 | Quarzsand H 33 | C) |
| 20,0 | Minex S 20 | C) |
| 8,5 | Heucosin Grau | Pigment |
| 1,1 | Foamaster 223 | Entschäumer |
| 0,1 | Nopco DSX 1550 | E) |
| 1,0 | Bentone EW (3%-ig) | E) |
| 0,8 | Loxanol DPN | D) |
| 0,4 | Dowanol TPM | D) |
| 9,1 | Wasser | F) |

Lediglich der Vollständigkeit halber sei angemerkt, daß die im Gesamtsystem vorhandene Menge Wasser (Komponente F der erfindungsgemäßen Beschichtungszusammensetzung) natürlich nicht allein der in der letzten Spalte der Tabelle 2 angegebenen Menge entspricht, da ein beachtlicher Teil Wasser ja auch über die Komponente B) eingetragen wurde.

### Beispiel 3

Man stellt eine Mischung der in Tabelle 3 genannten Komponenten her, wobei man die genannten Komponenten nacheinander mittels eines Dissolvers zusammenrührt. Zu 100 Gewichtsteilen dieser Mischung gibt man 15 Gewichtsteile Chem-Res E 30 (hierbei handelt es sich um Komponente A) der erfindungsgemäßen Beschichtungszusammensetzung).

**Tabelle 3**

| **Menge** **[Gew.-%]** | **Substanz** | **Komponente** |
|---|---|---|
| 17,9 | Waterpoxy 751 | B) |
| 41,1 | Quarzsand H 33 | C) |
| 20,0 | Calcicoll W 7 | C) |
| 8,5 | Heucosin Grau | Pigment |
| 1,1 | Foamaster 223 | Entschäumer |
| 0,1 | Nopco DSX 1550 | E) |
| 1,0 | Bentone EW (3%-ig) | E) |
| 0,8 | Loxanol DPN | D) |
| 0,4 | Dowanol TPM | D) |
| 9,1 | Wasser | F) |

Lediglich der Vollständigkeit halber sei angemerkt, daß die im Gesamtsystem vorhandene Menge Wasser (Komponente F der erfindungsgemäßen Beschichtungszusammensetzung) natürlich nicht allein der in der letzten Spalte der Tabelle 1 angegebenen Menge entspricht, da ein beachtlicher Teil Wasser ja auch über die Komponente B) eingetragen wurde.

### 3. Anwendungtechnische Eigenschaften

Die Zusammensetzungen gemäß den obigen Beispielen 1 bis 3 zeichneten sich generell durch folgende anwendungstechnischen Eigenschaften aus:
- es handelt sich um praktisch Lösungsmittel-freie Systeme,
- das Absetzverhalten der eingesetzten Füllstoffe in den Rezepturen ist äußerst gering,
- ein Bodensatz bestehend aus Sand und Füllstoffen kann leicht aufgerührt werden
- die Beschichtungsmassen sind selbstverlaufend
- im Vergleich zu konventionellen Systemen besteht eine verbesserte Chemikalienresistenz
- bei Rezepturen, die Sand als Füllstoff enthalten, können hohe Schichtstärken erreicht werden
- die Beschichtungsmassen können auf einfache Weise mit freien Aminen ohne Verträglichkeitsprobleme zur Erzielung besonderer Eigenschaften gemischt werden.

## Patentansprüche

1. Wäßrige Beschichtungszusammensetzungen enthaltend
| | | |
|---|---|---|
| A) | 5,0 bis 50,0 Gew.-% | Epoxidharze, die Umsetzungsprodukte von Bisphenol-A und/oder Bisphenol-F mit Epichlorhydrin darstellen, |
| | | |
| B) | 5,0 bis 55,0 Gew.-% | wasserverdünnbare Epoxidharzhärter, |
| | | |
| C) | 10,0 bis 80,0 Gew.-% | Füllstoffe, |
| | | |
| D) | 0,1 bis 5,0 Gew.-% | Offenzeitverlängerer auf Wachsbasis |
| | | |
| E) | 0,1 bis 5,0 Gew.-% | Rheologieadditive |
| | | |
| F) | 1,0 bis 20,0 Gew.-% | Wasser und |
| | | |
| G) | 0 bis 70 Gew.-% | weitere Zusatzstoffe und/oder Verarbeitungshilfsmittel, |
wobei die Summe der Gewichtsprozente der Komponenten A) bis G) 100 Gew.-% ergibt.

2. Mittel nach Anspruch 1, wobei man als Komponente A) bei 20 °C flüssige Epoxidharze einsetzt.

3. Mittel nach Anspruch 1 oder 2, wobei man als Komponente A) bei 20 °C flüssige Epoxidharze einsetzt, die Umsetzungsprodukte von Bisphenol-A mit Epichlorhydrin sind.

4. Mittel nach einem der Ansprüche 1 bis 3, wobei man Komponente A) in einer Menge von 5 bis 30 Gew.% einsetzt.

5. Mittel nach einem der Ansprüche 1 bis 4, wobei man Komponente B) in einer Menge von 5 bis 25 Gew.% einsetzt.

6. Mittel nach einem der Ansprüche 1 bis 5, wobei man Komponente C) in einer Menge von 50 bis 70 Gew.% einsetzt.

7. Mittel nach einem der Ansprüche 1 bis 6, wobei man Komponente D) in einer Menge von 0,1 bis 2,0 Gew.% einsetzt.

8. Mittel nach einem der Ansprüche 1 bis 7, wobei man Komponente E) in einer Menge von 0,1 bis 3,0 Gew.% einsetzt.

9. Mittel nach einem der Ansprüche 1 bis 8, wobei man Komponente F) in einer Menge von 1,0 bis 12,0 Gew.% einsetzt.

10. Verwendung der Beschichtungszusammensetzungen nach einem der Ansprüche 1 bis 9 als Ausgleichs- und Dämmassen.

## Claims

1. Water-based coating compositions containing
A) 5.0 to 50.0% by weight epoxy resins in the form of reaction products pf bisphenol A and/or bisphenol F with epichlorohydrin,
B) 5.0 to 55.0% by weight water-dilutable epoxy resin hardeners,
C) 10.0 to 80.0% by weight fillers,
D) 0.1 to 5.0% by weight wax-based open-time extenders,
E) 0.1 to 5.0% by weight rheology additives,
F) 1.0 to 20.0% by weight water and
G) 0 to 70% by weight other additives and/or processing aids,
the sum of the percentages by weight of components A) to G) coming to 100% by weight.

2. Compositions as claimed in claim 1, **characterized in that** epoxy resins liquid at 20°C are used as component A).

3. Compositions as claimed in claim 1 or 2, **characterized in that** epoxy resins liquid at 20°C in the form of reaction products of bisphenol A with epichlorohydrin are used as component A).

4. Compositions as claimed in any of claims 1 to 3, **characterized in that** component A) is used in a quantity of 5 to 30% by weight.

5. Compositions as claimed in claims 1 to 4, **characterized in that** component B) is used in a quantity of 5 to 25% by weight.

6. Compositions as claimed in any of claims 1 to 5, **characterized in that** component C) is used in a quantity of 50 to 70% by weight.

7. Compositions as claimed in any of claims 1 to 6, **characterized in that** component D) is used in a quantity of 0.1 to 2.0% by weight.

8. Compositions as claimed in any of claims 1 to 7, **characterized in that** component E) is used in a quantity of 0.1 to 3.0% by weight.

9. Compositions as claimed in any of claims 1 to 8, **characterized in that** component F) is used in a quantity of 1.0 to 12.0% by weight.

10. The use of the coating compositions claimed in any of claims 1 to 9 as levelling and insulating compounds.

## Revendications

1. Compositions de revêtement aqueuses contenant
A) 5,0 à 50,0 % en poids de résines époxydes, qui constituent des produits de réaction du bisphénol-A et/ou du bisphénol F avec l'épichlorhydrine,
B) 5,0 à 55,0 % en poids de durcisseurs de résines époxydes diluables à l'eau,
C) 10,0 à 80,0 % en poids de charges,
D) 0, 1 à 5,0 % en poids d'agents d'allongement du temps de travail possible, à base de cire,
E) 0,1 à 5,0 % en poids d'additifs rhéologiques,
F) 1,0 à 20,0 % en poids d'eau et
G) 0 à 70 % en poids d'autres additifs et/ou d'adjuvants de traitement,
la somme des pourcentages pondéraux des composants A) à G) donnant 100 % en poids.

2. Produit selon la revendication 1, dans lequel on utilise comme composant A) des résines époxyde liquides à 20°C.

3. Produit selon 1a revendication 1 ou 2, dans lequel on utilise comme composant A) des résines époxyde liquides à 20°C, qui sont des produits de réaction du bisphénol-A avec l'épichlorhydrine.

4. Produit selon l'une des revendications 1 à 3, dans lequel on utilise le composant A) en une quantité de 5 à 30 % en poids.

5. Produit selon l'une des revendications 1 à 4, dans lequel on utilise le composant B) en une quantité de 5 à 25 % en poids.

6. Produit selon l'une des revendications 1 à 5, dans lequel on utilise le composant C) en une quantité de 50 à 70 % en poids.

7. Produit selon l'une des revendications 1 à 6, dans lequel on utilise le composant D) en une quantité de 0,1 à 2,0 % en poids.

8. Produit selon l'une des revendications 1 à 7, dans lequel on utilise le composant E) en une quantité de 0,1 à 3,0 % en poids.

9. Produit selon l'une des revendications 1 à 8, dans lequel on utilise le composant F) en une quantité de 1,0 à 12,0 % en poids.

10. Utilisation des compositions de revêtement selon l'une des revendications 1 à 9, comme masses d'équilibrage et d'isolation.
